# FASCICULE DE BREVET EUROPEEN

(11) **EP 1 626 893 B1**
(45) Date de publication et mention de la délivrance du brevet: **23.01.2008**
(21) Numéro de dépôt: 04767186.2
(22) Date de dépôt: 27.05.2004
(51) Int. Cl.: B62K 25/02

(54) **DISPOSITIF DE FIXATION EN PORTE-A-FAUX D'UNE ROUE DE VELO SUR UN CADRE AVEC UN MECANISME DE SERRAGE RAPIDE**
VORRICHTUNG MIT EINEM SCHNELLKLEMMMECHANISMUS ZUR BEFESTIGUNG EINES FAHRRADRADES AN EINEM RAHMEN MIT EINEM ÜBERHANG
DEVICE COMPRISING A QUICK-ACTION CLAMPING MECHANISM AND USED TO FIX A BICYCLE WHEEL TO A FRAME, WITH AN OVERHANG

(30) Priorité: 28.05.2003 FR 0306545
(43) Date de publication de la demande: 22.02.2006
(73) Titulaire: SALOMOM S.A., 74370 Metz-Tessy (FR)
(72) Inventeur: MERCAT, Jean-Pierre, F-74650 Chavanod (FR); HILLAIRET, Jean-Marc, F-58000 Nevers (FR)
(86) Numéro de dépôt international: PCT/FR2004/001308
(87) Numéro de publication internationale: WO 2004/108516

(56) Documents cités:
- EP-A- 0 094 649
- EP-A- 0 612 629
- EP-A- 1 153 827
- FR-A- 538 144
- FR-A- 2 684 063

## Description

La présente invention concerne un dispositif de fixation en porte à faux d'une roue de vélo sur un cadre avec un mécanisme de serrage rapide.

Le document EP 612 629 décrit un dispositif de montage d'une roue qui ne permet pas d'effectuer un serrage satisfaisant de la roue.

Le document FR 2 684 063 décrit une telle fixation dans lequel le serrage s'effectue à l'aide d'un écrou de façon à assurer un serrage suffisant. En effet dans ce type de dispositif de fixation, dite également fixation monobras, l'effort de serrage doit être plus important que dans le cas d'une fixation traditionnelle où la roue est fixée entre les deux bras de la fourche. La fixation par écrou est non seulement longue à mettre en oeuvre mais également peu pratique car elle nécessite un outil pour obtenir un serrage suffisant.

Il est par conséquent souhaitable de pouvoir utiliser un dispositif de fixation monobras avec un moyen de serrage ne nécessitant pas l'utilisation d'outils pour être manoeuvré.

Le document EP 1 153 827 reflète l'état de la technique le plus proche et décrit un dispositif de fixation monobras qui utilise un moyen d'attache rapide. Il s'agit d'un mécanisme comprenant une pince dont les mors sont mobiles à l'intérieur d'un cône. Pour assurer une grande force de serrage et pouvoir être actionné manuellement, ce mécanisme doit être équipé d'un cône, en fait d'un tronc de cône, dont l'angle au sommet est faible, en principe inférieur à 45°. Ceci rend le mécanisme très volumineux en occupation axiale. Or il est connu que l'occupation axiale dans un dispositif de fixation d'une roue est critique, notamment pour la roue arrière où la fixation de la roue proprement dite doit partager le volume axial avec les paliers à roulements, les pignons d'entraînement et éventuellement le disque du frein. De plus le rendement d'un tel dispositif est très faible du fait des frottements importants existants entre les différentes pièces du mécanisme notamment entre les pinces et la surface intérieure du cône.

Dans un dispositif à fixation monobras, une partie des éléments et des fonctions habituellement présentes sur le moyeu d'une roue traditionnelle peut avantageusement rester, à demeure sur le cadre. On parle alors de moyeu interne qui est monté tournant au cadre par l'intermédiaire de palier à roulement et qui porte d'une part les pignons de chaîne et éventuellement un disque de frein, et d'autre part un moyeu externe lequel est propre à la roue et concentre les rayons, les bâtons ou les flancs de celle-ci. La liaison entre le moyeu externe et le moyeu interne doit être facilement désolidarisable et assurer une bonne transmission des efforts.

Dans le document EP 1 153 827, le mécanisme de serrage rapide est équipé d'un levier dont le basculement fournit l'effort de serrage. Le levier est monté sur un axe et comprend une came dont le frottement occasionne une perte de rendement du mécanisme de serrage. Ce levier accompagne la roue dans son mouvement en rotation et constitue, de ce fait, un danger. En effet des éléments extérieurs à la bicyclette tels que des branches ou des fils peuvent venir s'entortiller autour du levier.

L'objectif de l'invention est de palier aux inconvénients précités et notamment de fournir un dispositif de fixation en porte à faux d'une roue sur un cadre qui soit utilisable avec un mécanisme de serrage rapide et qui soit peu volumineux dans la direction axiale.

L'objectif de l'invention est également de prévoir un dispositif de fixation d'une roue dont le mécanisme de serrage a un rendement amélioré.

L'objectif de l'invention est également de prévoir un dispositif de fixation d'une roue dont le mécanisme de serrage rapide minimise l'occupation volumineuse axiale.

L'objectif de l'invention est également de prévoir un dispositif de fixation d'une roue qui évite tout risque d'entortillement d'éléments extérieurs tels que des branches ou des fils autour du levier de serrage.

L'objectif de l'invention est également de prévoir un dispositif de fixation d'une roue dont le mécanisme de serrage a un dispositif de sûreté de façon à empêcher tout desserrage intempestif et tout risque de démontage accidentel de la roue.

L'objectif de l'invention est atteint par la fourniture d'un dispositif de fixation d'une roue de vélo sur un cadre comprenant :
- un moyeu interne monté rotatif dans une portion dudit cadre,
- un moyeu externe constituant la zone centrale de ladite roue,
- un mécanisme de serrage rapide équipé d'un levier dont le basculement par l'opérateur fournit la force de serrage axial dudit moyeu externe de la roue contre ledit moyeu interne
ledit mécanisme de serrage rapide comprend une partie mâle faisant saillie depuis l'un ou l'autre desdits moyeux interne et externe, une partie femelle ménagée dans l'autre desdits moyeux, des moyens de butée axiale assurant la retenue du moyeu externe contre le moyeu interne et des moyens de mise en place desdits moyens de butée axiale et dans lequel les moyens de mise en place des moyens de butée axiale ne sont plus actifs à la fin du serrage. En d'autres termes, les butées axiales sont en place avant la fin de la phase de serrage.

Dans un dispositif selon l'invention le serrage se décompose en deux phases. Dans la première, on met en place des moyens de butée axiale par l'actionnement de moyens de mise en place. Ces moyens de mise en place mettent en mouvement des éléments de la partie mâle et/ou de la partie femelle. Ensuite, intervient la phase de serrage proprement dite, où les butées axiales viennent en contact et sont appliquées les unes contre les autres sous la contrainte de la force de serrage.

Selon l'invention, la force de serrage appliquée par l'utilisateur va d'abord être utilisée pour la mise en place des butées axiales (première phase) pour être ensuite entièrement consacrée à l'application des surfaces de butée axiale les unes contre les autres (deuxième phase). Lors de cette deuxième phase, le seul mouvement en jeu est un mouvement suivant l'axe et aucun frottement par glissement n'est en jeu dans une autre direction que celle de l'axe, ce qui optimise le rendement du serrage, notamment pendant la deuxième phase.

Avantageusement, les moyens de mise en place des butées axiales comprennent un ou plusieurs pivots.

Avantageusement dans un premier mode de réalisation, les moyens de mise en place des butées axiales comprennent une ou plusieurs rampes sur laquelle roule une ou plusieurs billes. Ainsi dans la phase de mise en place des moyens de butée axiale, les frottements sont minimisés ce qui contribue à améliorer le rendement du serrage dans son ensemble.

Avantageusement, le levier d'actionnement du dispositif de serrage est fixé au reste du dispositif par l'intermédiaire d'un mécanisme à genouillère.

Dans un troisième mode de réalisation de l'invention, les moyens de butée axiale sont constitués par des cales et les moyens de mise en place des butées axiales comprennent un ressort et un pivot sur lequel sont montées les cames.

Dans un quatrième mode de réalisation de l'invention, les moyens de butée sont constitués par des cales et les moyens de mise en place comprennent des rampes grâce auxquelles les cames passent d'une position centrale à une position périphérique.

Selon un cinquième mode de réalisation de l'invention, les butées axiales sont disposées sur une croix et les moyens de mise en place des butées axiales comprennent des moyens de pivot de ladite croix orientés selon l'axe de la roue.

Selon un cinquième mode de réalisation de l'invention, les butées axiales sont mise en place automatiquement dès l'introduction de la partie mâle, constituée par un plot, dans la partie femelle, constituée par une cavité fermée par un diaphragme. Lors de la phase de serrage, l'effort exercé par l'utilisateur n'est alors utilisé que pour rapprocher axialement les butées axiale.

Avantageusement dans chacun des modes de réalisation de l'invention, le mécanisme de serrage rapide est équipé d'un dispositif de sûreté empêchant toute ouverture intempestive du mécanisme.

Avantageusement dans chacun des modes de réalisation de l'invention, en position repliée du levier, son extrémité est protégée par les bâtons de la roue, afin d'empêcher l'entortillonnage.

D'autres avantages de l'invention seront décrits dans ce qui suit et font l'objet des revendications dépendantes. L'invention sera décrite en référence au dessin annexé qui présente à titre d'exemple, des modes de réalisation préférés de celle-ci et dans lequel :
- la figure 1 montre une vue de coupe d'un premier mode de réalisation de l'invention,
- la figure 2 montre le dispositif de la figure 1 lors de la mise en place de la roue,
- la figure 3 montre le dispositif de la figure 4 lorsque le dispositif est en place,
- la figure 4 montre la cage à bille isolée du reste du dispositif,
- la figure 5 montre le capot isolé du reste du dispositif,
- la figure 6 montre un deuxième mode de réalisation de l'invention,
- la figure 7 montre un troisième mode de réalisation de l'invention,
- la figure 8 montre un quatrième mode de réalisation de l'invention,
- la figure 9 montre un cinquième mode de réalisation de l'invention,
- les figures 10 et 11 sont des détails du cinquième mode de réalisation.
- la figure 12 montre une vue de face d'un sixième mode de réalisation de l'invention,
- la figure 13 montre une vue en coupe partielle du sixième mode de réalisation de l'invention,
- la figure 14 montre une vue en perspective du diaphragme du sixième mode de réalisation de l'invention,
- les figures 15, 16 et 17 montrent des vues de face du diaphragme dans trois phases différentes de l'utilisation du sixième mode de réalisation de l'invention.
- la figure 18 montre une vue en coupe longitudinale du sixième mode de réalisation de l'invention lorsque le roue est en place et serrée.
- la figure 19 montre une vue de face du premier mode de réalisation de l'invention.
- les figures 20, 21 et 22 montrent des vues de détail du levier selon le premier mode de réalisation de l'invention.

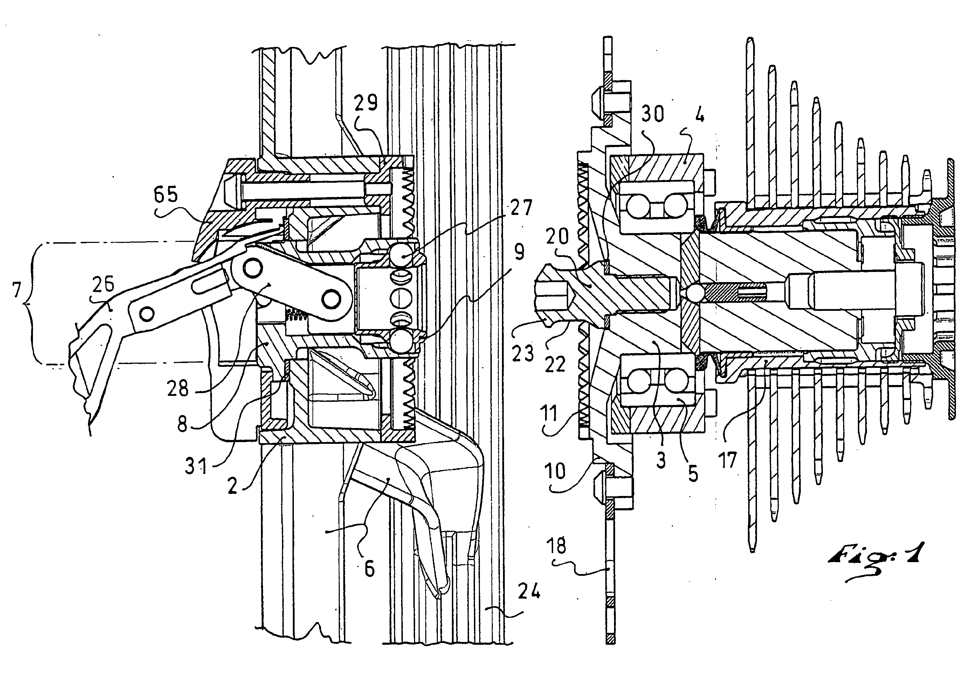

La figure 1 décrit le dispositif de fixation selon un premier mode de réalisation de l'invention. La partie droite de la figure représente le vélo, tandis que la partie gauche représente la roue. Le vélo n'y est visible que par l'extrémité du cadre 4 sur lequel le moyeu interne 3 est fixé. Ce dernier est monté rotatif par l'intermédiaire d'un palier à roulement à billes 5. Le moyeu interne 3 est prévu pour recevoir sur l'une de ses extrémités le corps de roue libre 17 dont la description détaillée ne sera pas reprise dans ladite demande de brevet. Bien entendu, la présence de ce corps de roue libre est conditionnée par le fait qu'il s'agisse d'une roue arrière de vélo. Dans le cas d'une roue avant le moyeu interne 3 n'est pas pourvu de cet appendice de support de corps de roue libre. A l'autre extrémité, le corps de roue libre 17 comprend une platine 10 depuis laquelle une pluralité de dents 11 font saillie axialement. Cette pluralité de dents 11 est disposée suivant un premier cercle centré sur l'axe de rotation du moyeu interne, chacune des dents ayant son arête sommitale orientée radialement. La platine 10 comprend en outre des pattes servant à la fixation d'un disque de freinage 18. La surface frontale de la platine 10 a la forme d'un renfoncement tronconique au fond duquel est ménagé un alésage taraudé. Cet alésage reçoit un plot 20 vissé jusqu'à ce qu'un épaulement vienne en appui sur la surface frontale de la platine 10. Une première rondelle 30 d'épaisseur connue s'intercale entre le plot 20 et la platine 10 de façon à régler la position axiale du plot 20. Le plot 20 comprend une gorge 22 et un embout 23.

La partie gauche de la figure 1 représente partiellement la roue 1. On peut y voir la jante 24, le moyeu externe 2 et quelques uns des bâtons 6 qui relient la jante 24 au moyeu externe 2. Toute la partie centrale du moyeu externe 2 est largement évidée pour pouvoir loger la partie femelle du mécanisme de serrage rapide 7. Le moyeu externe de la roue comprend une surface d'appui circulaire contre laquelle est fixée une couronne dentée 29. La couronne 29 est équipée d'une pluralité de dents, disposées suivant un deuxième cercle, et identiques à celles ménagées sur la platine 10 du moyeu interne 3. La coopération des dents du moyeu interne et de celles du moyeu externe assure la transmission des efforts axiaux, du couple d'entraînement de la chaîne et du couple de freinage entre la roue et le vélo. Les dents sont disposées selon un cercle dont le diamètre est supérieur à 25 mm. La couronne est fixée au moyeu interne par l'intermédiaire de trois vis. La partie femelle du mécanisme de serrage comprend un capot 8 fixé au moyeu externe 2. Une deuxième rondelle 31 d'épaisseur connue s'interpose axialement entre le capot et le moyeu externe de façon à assurer un positionnement axial très précis de la partie femelle du mécanisme de serrage. A l'intérieur du capot 8, coulisse une cage 9 maintenant huit billes 27. La cage 9 est actionnée en translation par l'intermédiaire d'un tirant 28 et d'un levier 26.

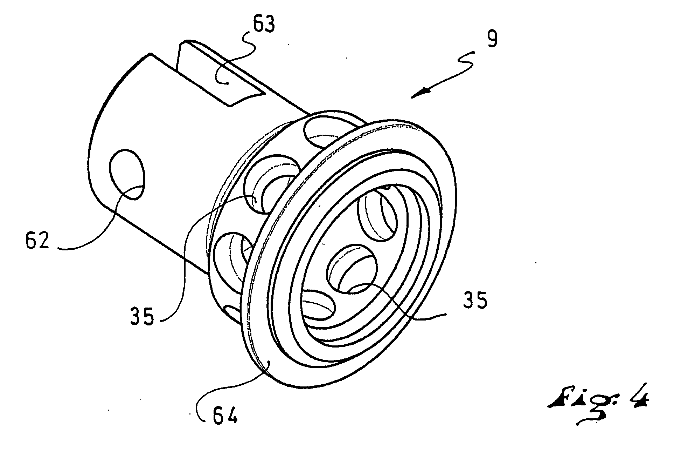

La cage 9 est représentée isolée du reste du dispositif à la figure 4. Elle comprend une partie pleine et une partie creuse. La partie pleine, représentée à gauche de la figure est traversée par un alésage transversal 62 ainsi que par une fente 63 perpendiculaire audit alésage. Un axe est glissé dans l'alésage pour servir de pivot au tirant 28. Ledit tirant est inséré dans la fente. La partie creuse est dimensionnée de façon à recevoir l'extrémité du plot de la partie mâle du dispositif. Dans la paroi périphérique, huit logements 35, traversant cette dernière, sont ménagés. Chacun de ces logements 35 reçoit une bille 27. Le diamètre des logements 35 au niveau de la face intérieure de la cage est sensiblement inférieur au diamètre de la bille 27, elle-même, afin d'éviter que celle-ci ne quitte le logement 35 par l'intérieur de la cage 9. Bien entendu, le nombre de huit billes pour le mécanisme de serrage rapide n'est pas limitatif. La cage 9 comprend également une lèvre d'étanchéité 64 évitant la pénétration de salissures dans la partie femelle du mécanisme de serrage.

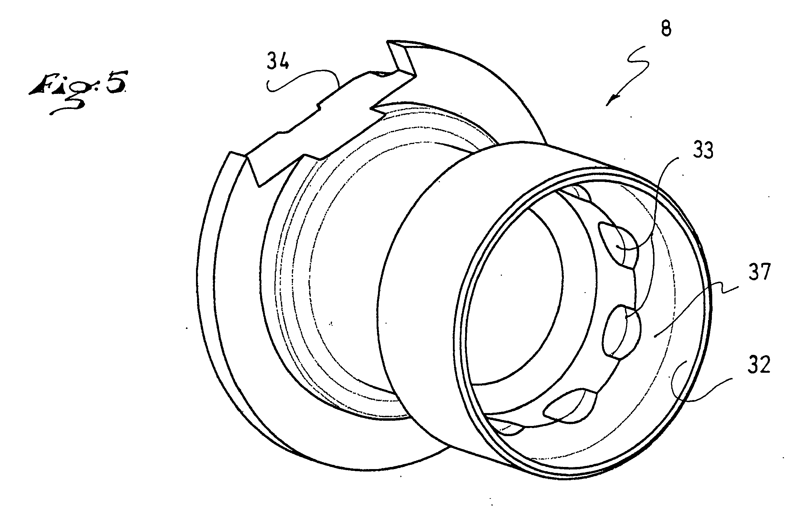

Le capot 8 est représenté isolé du reste du dispositif à la figure 5. Celui-ci a sensiblement la forme d'une douille ayant à l'une de ses extrémités une collerette d'appui prévu pour prendre appui, éventuellement par l'intermédiaire d'une rondelle sur le moyeu externe. L'intérieur du capot 8 reçoit la cage 9 et comprend à l'autre de ses extrémités un élargissement 32 précédé de huit alvéoles 33. L'élargissement 32 est une surface cylindrique. Le fond de chacune des alvéoles 33 est plus près de l'axe que le fond de l'élargissement. Entre l'élargissement 32 et chacune des alvéoles se trouvent une rampe. L'ensemble des huit rampes 37 constitue les moyens de mise en place des moyens de butée axiale. Avantageusement, les alvéoles ont, selon un plan perpendiculaire à l'axe, un profil circulaire dont le rayon est sensiblement le même que le rayon des billes. Lorsque les billes 27 sont en contact avec les alvéoles 33, la pression de contact est moindre que si ce contact était ponctuel. Par conséquent, l'énergie de déformation générée par ce contact est également moins importante. Grâce à cela, la reproductibilité du serrage est très bonne et il est possible d'utiliser des matériaux moins dur. On pourrait cependant remplacer les huit alvéoles 33 par une unique surface cylindrique, à condition d'utiliser un matériau très dur, si un même niveau de performance, et de reproductibilité est recherché. De façon similaire, on peut également remplacer l'élargissement cylindrique 32 par huit zone discrètes élargies. Le capot 8 est fermé par un couvercle 34, lequel dispose d'une ouverture permettant le passage du tirant. Par dessus le couvercle 34, se trouve un chapeau 65. Trois vis assurent la fixation du chapeau 65 et de la couronne 29 au moyeu externe 2.

Entre la cage 9 et le couvercle du capot 8, est disposé un ressort qui, lorsque le levier est ouvert, pousse la cage 9 en position ouverte, et lui donnant ainsi une position stable. Du fait de la présence de la genouillère (levier en pivot sur le couvercle et sur le tirant), lorsque le levier est en position fermée, ce ressort maintien également la cage 9 et le levier dans une position stable. La présence de ce ressort est particulièrement avantageuse pour le transport et la manutention de la roue indépendamment du vélo, car le levier 26 se maintient contre l'un des bâtons. Elle l'est également lors de la mise en place de la roue sur le moyeu interne 3, car sans autre manipulation du levier, celui-ci se maintient en position ouverte.

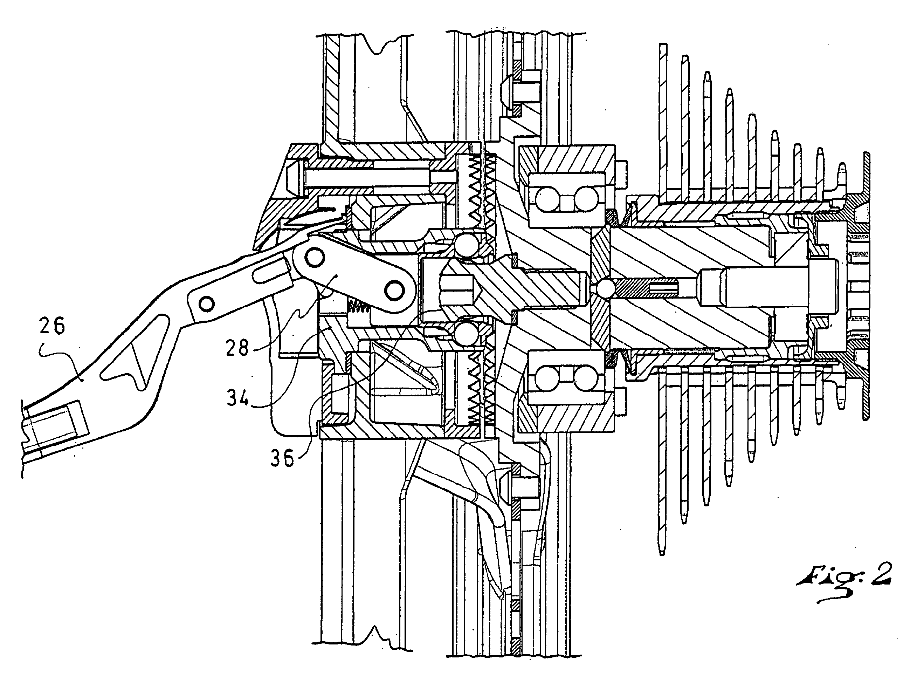

La figure 2 décrit le dispositif de fixation de la roue lors de la mise en place de celle-ci sur le moyeu interne 3. Au préalable, le levier 26 a été actionné pour ouvrir le mécanisme de serrage rapide. Le levier 26 est en appui pivotant sur le couvercle 34 du capot et il est également relié au tirant par l'intermédiaire d'un deuxième pivot. Il est ainsi réalisé une genouillère. En position ouverte donc, le levier se trouve orienté sensiblement suivant l'axe de la roue. Par l'intermédiaire du tirant 28, la cage 9 est translatée vers l'extérieur du capot 8, c'est à dire vers la droite sur la figure 2. Dans cette position, les logements 35, ainsi que les billes qu'il retiennent, font face à l'élargissement du capot 8. Lorsque la roue est approchée du moyeu interne, le chanfrein 36 de l'extrémité saillante du plot 20 chasse les billes vers l'extérieur jusqu'à ce qu'elle viennent au contact du capot 8. Le diamètre intérieur de l'élargissement 32 est tel que, lorsque les billes y sont plaquées, le plot 20 peut poursuivre son introduction dans la cage 9 jusqu'à ce que les dents du moyeu externe viennent au contact de celles du moyeu interne.

L'étape suivante consiste en la mise en place des moyens de butée axiale qui sont constitués par la coopération des billes 27 et de l'embout 23. Cette étape à lieu lors de la première partie de la course de basculement du levier 26. Ce faisant, la cage 9, ainsi que les billes 27, est ramenée axialement à l'intérieur du capot 8. Le mouvement axial des billes 27 les fait passer de l'élargissement 32 aux alvéoles 33, ce qui les ramènent radialement vers l'intérieur jusqu'à venir dans la gorge 22 du plot 20. A ce stade, la roue est en place, mais la fixation n'est pas encore serrée.

Enfin la dernière étape a lieu lors de la deuxième partie de la course du basculement du levier 26. La cage 9 continue d'être tirée axialement vers l'intérieur du capot. Les billes 27 accompagnent le mouvement axial de la cage 9 et viennent en contact avec l'embout 23 du plot 20. La poursuite du basculement du levier jusqu'à la fin de sa course, augmente la pression de contact entre les billes et l'embout ainsi qu'entre les dents de la platine 10 et celles de la couronne 29. Dans cette dernière étape, l'effort fourni par l'utilisateur pour basculer le levier est uniquement utilisé pour le mouvement axial des moyens de buté du mécanisme les uns vers les autres. Dans ce mouvement, les frottements sont réduits au minimum. De plus, grâce à la genouillère, l'utilisateur bénéficie d'une assistance au serrage lors de la fin de course du levier.

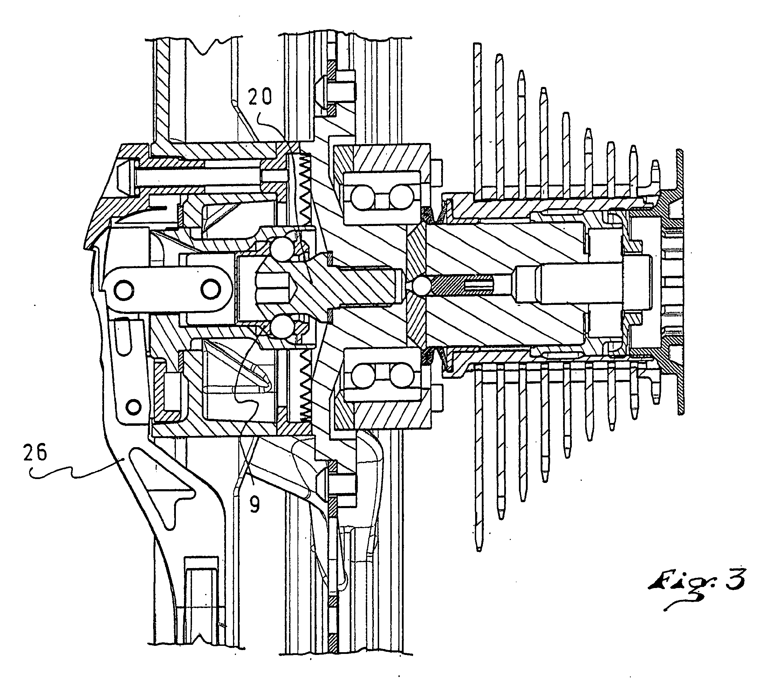

L'état final est décrit à la figure 3. Le levier 26 est plaqué contre l'un des bâtons, afin d'éviter tout risque d'accrochage intempestif, la cage 9 est rentrée à l'intérieur du capot 8 à son maximum. Les billes 27 sont alors forcées par les alvéoles au contact du plot 20.

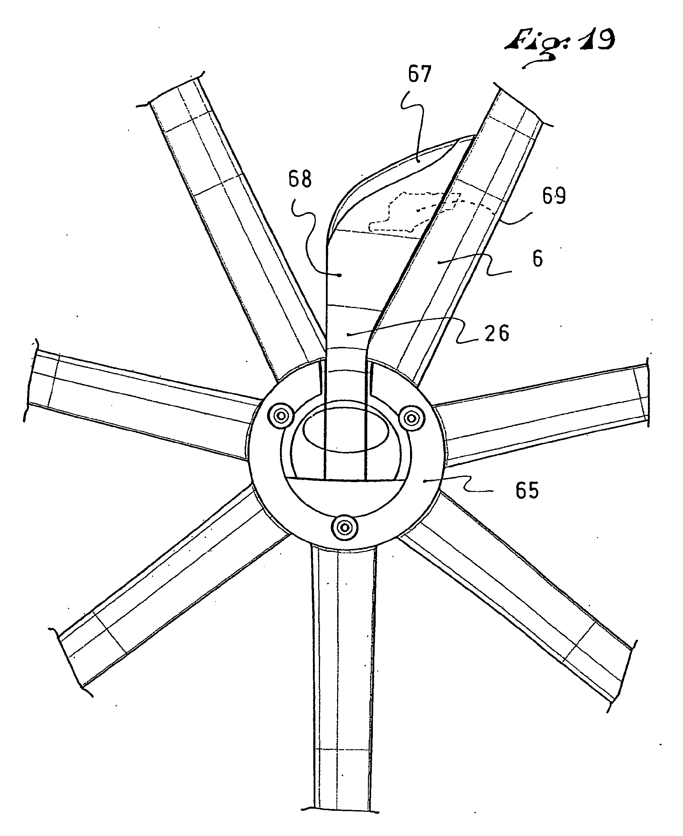

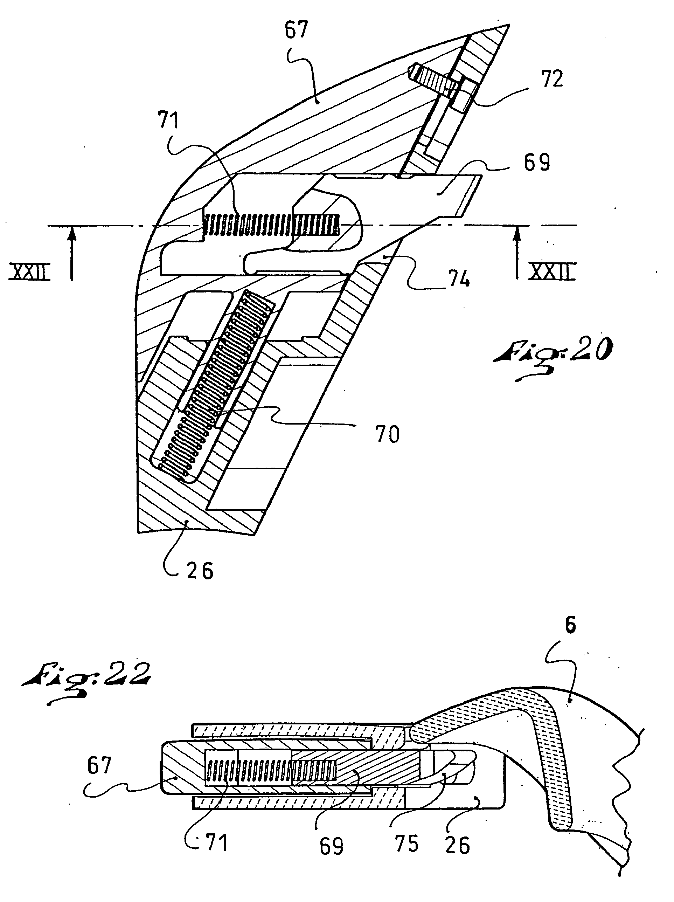

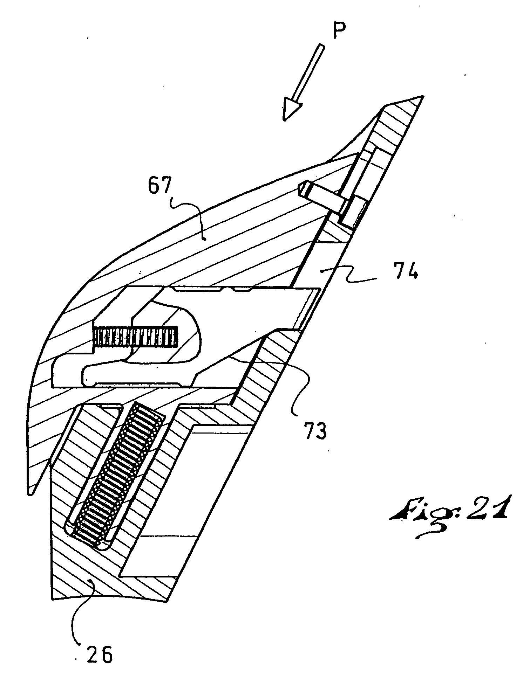

La figure 19 décrit une vue de face de la roue équipée avec le mécanisme de serrage rapide selon le premier mode de réalisation de l'invention. Sur cette figure, le levier 26 est en position fermée et il est rabattu contre l'un des bâtons 6. Il n'offre ainsi aucune extrémité saillante, ce qui empêche toute possibilité d'accrochage d'un élément extérieur au vélo. D'autre part, il est équipé d'un dispositif de sûreté, rendant impossible son ouverture accidentelle. Les figures 20 et 21 en montrent la composition et le fonctionnement.

Le dispositif de sûreté est logé dans le corps 68 du levier 26. Il se compose d'un poussoir 67 et d'un pêne 69. Le poussoir 67 est monté coulissant dans le corps du levier, ledit montage étant assuré par la translation d'une douille issue de la base du poussoir dans un alésage correspondant ménagé dans le corps du levier et par le coulissement d'une vis de rappel 72 dans une fente du levier 26. Un ressort de poussoir 70 maintient celui-ci en position haute. Le pêne 69 est monté coulissant dans un logement du poussoir et il est poussé hors de ce logement par la présence d'un ressort de pêne 71. Une ouverture de levier 74 est ménagée dans la face du levier qui vient au contact du bâton lorsque le levier est rabattu. Cette ouverture de levier 74 fait face au logement du pêne dans le poussoir et empêche que celui-ci ne sorte complètement car elle a des dimensions plus petite que les dimensions extrêmes du pêne 69.

A la figure 20, le poussoir 67 est en position stable, le pêne 69 fait saillie par l'ouverture 74 du levier 26. C'est dans cette position que se trouve le dispositif de sûreté lorsque l'utilisateur bascule le levier vers sa position rabattue. Lorsque le levier arrive au contact du bâton, le pêne se rétracte dans son logement. Un plan incliné 75 facilite ce retrait. La poursuite du basculement du levier l'amène en position rabattue et le pêne 69 reprend sa position stable saillante montrée à la figure 20. la surface du pêne 69 alors au contact avec le bâton est parallèle à ce dernier et n'autorise aucun retrait de celui-là. Le levier 26 est donc sécurisé et ne peut s'ouvrir accidentellement. La figure 22 représente en coupe le levier 26 en position sécurisée le long du bâton 6 et permet de voir le plan incliné 75 qui aide au retrait du pêne 69 lorsque le levier passe contre le bâton 6.

Pour pouvoir ouvrir le levier 26, il est nécessaire de presser sur le poussoir 67. Par la coopération entre la rampe de pêne 73 et le bord de l'ouverture 74, la pression sur le poussoir a pour effet de rétracter le pêne 69. La figure 21 illustre la position respective des pièces du dispositif de sûreté lorsqu'une pression P est appliquée sur le poussoir 67. Le levier peut alors passer le long du bâton, et l'actionnement du mécanisme de serrage rapide peut avoir lieu.

Le dispositif de sûreté est entièrement contenu dans le corps du levier lequel à une forme aérodynamique pour augmenter les performances de la roue.

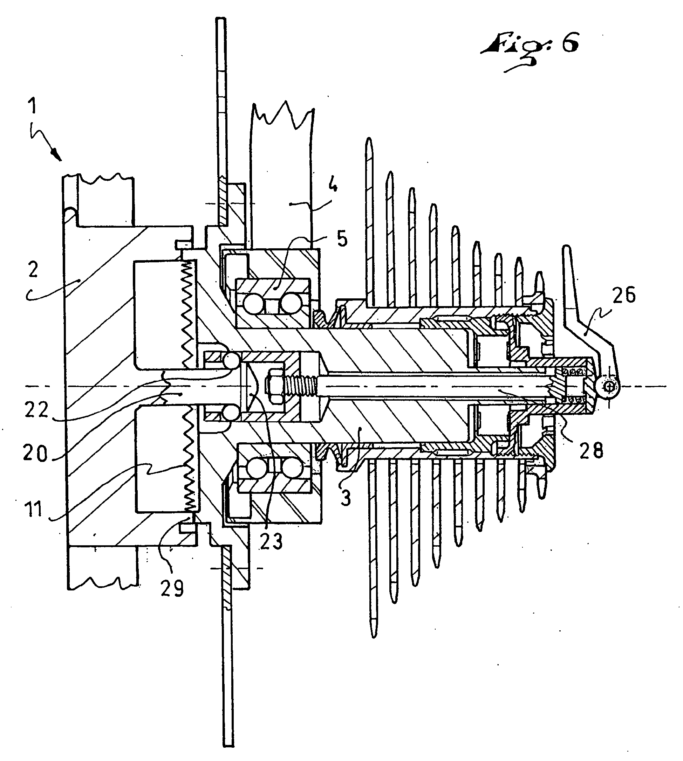

La figure 6 décrit un deuxième mode de réalisation de l'invention. La roue arrière 1 comprend une jante et un moyeu externe 2 reliés entre eux par une pluralité de bâtons. Comme dans le mode de réalisation précédent, les bâtons ne sont pas rectilignes mais ont un déport de façon à rapprocher le plan médian de la roue, défini par le milieu de la jante au plus près du plan médian du cadre 4. Le moyeu externe 2 comprend une couronne 29 de diamètre supérieur à 50mm et au sommet de laquelle est disposée une pluralité de dents 11. Au centre de la couronne se trouve un plot 20 muni à son extrémité d'une gorge 22 et d'un embout 23 chanfreiné. Le moyeu interne 3 est monté rotatif dans un alésage du cadre 4 par l'intermédiaire d'un palier à roulement 5. Il est constitué d'un corps cylindrique 16 sur lequel est monté le corps de roue libre et d'une platine 10 servant à la fixation d'un disque de freinage et à la disposition de moyen d'appui axial sous la forme d'une pluralité de dents.

Les éléments femelle du mécanisme de serrage sont disposés à l'intérieur du moyeu interne 3. Ils comprennent une cage à billes montée coulissante et actionnée par un tirant 28 et une pluralité de billes. Les billes 27 sont maintenues prisonnières dans des ouvertures traversantes de la cage à billes. L'alésage dans lequel coulisse la cage à billes comprend à son extrémité ouverte un épaulement précédé d'autant de rampes qu'il y a de billes. Par l'action du tirant, la cage à billes est entraînée vers l'intérieur de l'alésage et les rampes, qui constituent les moyens de mise en place des butées axiales, forcent les billes vers l'axe. Après que les billes sont en place, la force de serrage est entièrement utilisée pour plaquer, sous contrainte, les billes contre la partie mâle du mécanisme de serrage. Le tirant 28 traverse le moyeu interne. Son extrémité libre comprend un levier à came 26 monté pivotant. La came du levier repose sur un capot fixé au moyeu interne. Un ressort est disposé entre le tirant et le capot pour assurer le contact permanent entre la came et le capot.

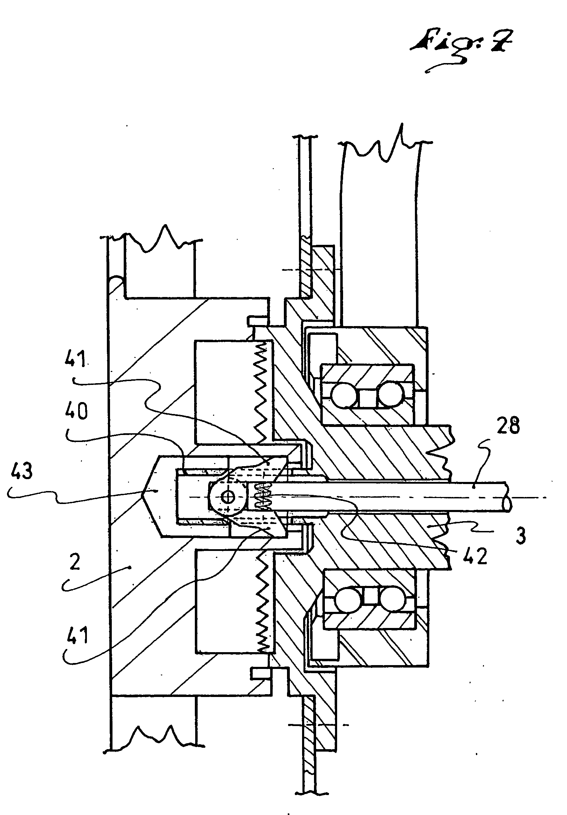

La figure 7 montre un troisième mode de-réalisation de l'invention. Le moyeu externe 2 de la roue comprend des moyens d'appui axial sous la forme d'une pluralité de dents répartie sur une couronne, à l'intérieur de cette couronne est ménagée une cavité épaulée 43.

Le moyeu interne 3 comprend une platine à la périphérie de laquelle sont disposés les moyens d'appui axial constitués de dents complémentaires de celles ménagées sur le moyeu externe. Une douille 40 fixée sur le moyeu interne 3 ou faisant partie intégrante de celui-ci fait saillie depuis le centre de la platine. L'intérieur de cette douille est occupé par les butées axiales et le dispositif de mise en place de celles-ci. L'actionnement du mécanisme de serrage intervient, comme dans le mode de réalisation précédent, par l'intermédiaire d'un tirant 28 qui traverse le moyeu interne 3 et qui est entraîné en translation par un levier basculant. Cette partie du mécanisme n'est pas représentée sur la figure 7. L'extrémité du tirant 28, qui est intégrée dans la douille, comporte une gorge axiale. Deux cames pivotantes 41 sont montées dans la gorge axiale. Ces cames 41 sont fixés sur le tirant par l'intermédiaire d'un même axe et elles sont mutuellement pressées vers l'extérieur par l'intermédiaire d'un ressort spirale 42. Deux ouvertures sont ménagées dans la douille 40 au regard des cames 41, permettant à celle-ci de faire saillie vers l'extérieur de la douille 40 en fonction de la position axiale du tirant 28.

La cavité 43 du moyeu externe 2 reçoit la douille 40 lorsque la roue est mise en place sur le moyeu interne 3. A l'entrée de cette cavité est disposé un épaulement 44 prévu pour coopérer avec les extrémités des cames pivotantes 41. Les cames et l'épaulement constituent les moyens de butée axiale du mécanisme de serrage rapide. Le fonctionnement du mécanisme procède comme suit : Dans la première partie de la course de basculement du levier, le tirant 28 déplace axialement le point de pivot des deux cames 41. Les bords des cames 41 glissent contre les ouvertures ménagées dans la douille 40, et elles sont pressées par le ressort spirale 42 à se déployer hors de la douille. Ainsi les extrémités des cames qui constituent les butées axiales du mécanisme de serrage rapide se trouvent en regard de l'épaulement. Après cette première phase de mise en place des moyens de butée axiale, la poursuite du basculement du levier génère un déplacement axial du tirant et des cames déployées, puis, lorsque les extrémités des cames sont en contact avec l'épaulement, une mise en pression de ce contact. C'est la phase de serrage proprement dite.

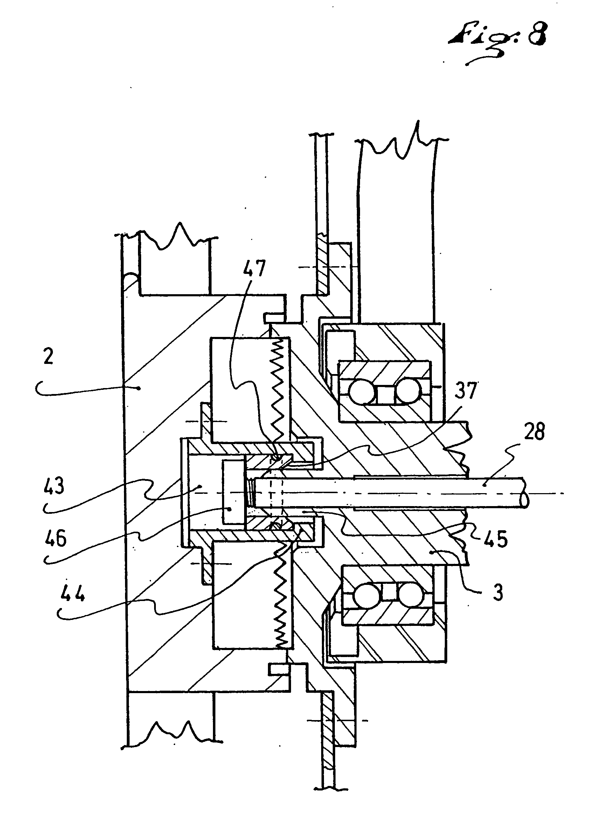

La figure 8 décrit un quatrième mode de réalisation de l'invention. Le moyeu externe 2 de la roue comprend une cavité 43 à l'entrée de laquelle se trouve un épaulement 44. la partie mâle comprend quant à elle un tirant 28 qui peut coulisser dans le moyeu interne 3 et qui est actionné par un levier. Le tirant 28 sort du moyeu interne 3 depuis un collet 45. A l'extrémité du tirant est fixé une tête 46. Entre la tête 46 et le collet 45 sont placées une pluralité de cames 41. Ces cames sont plaquées contre le tirant 28 par l'intermédiaire d'un anneau élastique 47. L'ensemble de ces cames forme ainsi une douille extensible autour du tirant 28. Dans leur extrémité proches du collet 45, les cames comprennent des rampes 37. Lorsque le tirant 28 est translaté vers le moyeu interne 3, les rampes 37 glissent contre le collet 45 jusqu'à ce que les cames 41 chevauchent le collet 45. Après cette phase de mise en place des moyens de butée axiale, la poursuite du mouvement de translation du tirant amène les cames 41 au contact avec l'épaulement 44 de la cavité 43 puis met en pression ce contact. La figure 8 décrit précisément l'état des pièces lorsque le serrage est accompli. Lors de la désolidarisation de la roue, l'ouverture du levier translate le tirant 28 et éloigne la tête 46 du moyeu interne. Une légère traction axiale sur la roue, exercée par l'utilisateur, entraîne les cames qui, dès qu'elles ont dépassées l'extrémité du collet, sont rassemblées contre le tirant. La poursuite du mouvement de traction sur la roue permet l'extraction complète de la roue.

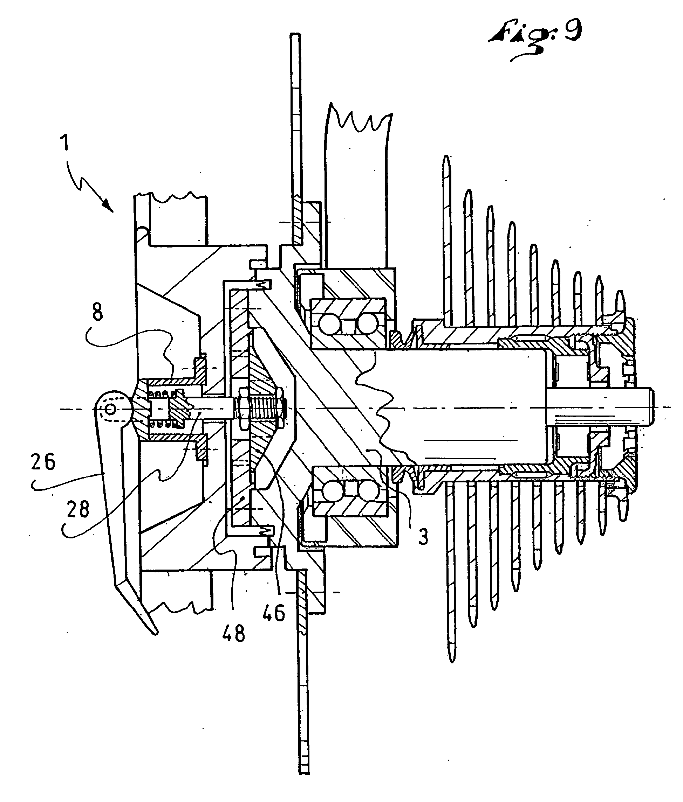

La figure 9 montre un cinquième mode de réalisation de l'invention. Dans ce mode de réalisation, la partie femelle du dispositif est réalisée dans le moyeu interne 3. Elle consiste en une cavité fermée par une plaque 48 dans laquelle est ménagée une ouverture en forme de croix. La plaque 48 est fixée sur la platine par des vis (non représentées). La roue 1, quant à elle, est équipée de la partie mâle du mécanisme de serrage rapide. Un capot 8 est fixé sur le moyeu externe de la roue. A l'intérieur de ce capot, un tirant 28 peut coulisser et tourner autour de son axe. La translation du tirant 28 est générée par la rotation d'un levier 26 et par l'intermédiaire d'une came. Le tirant 28 traverse le moyeu interne et une tête 46 est fixée à l'extrémité de celui-ci. Cette tête 46 possède une forme complémentaire de celle de l'ouverture ménagée dans la plaque 48.

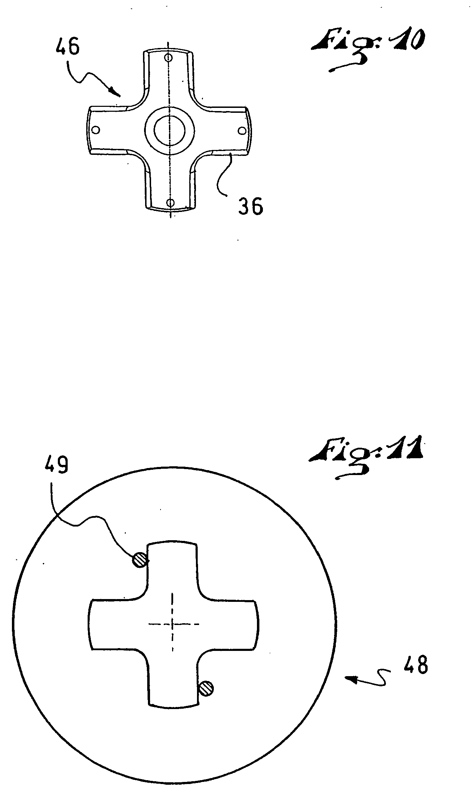

La figure 10 montre une vue de dessus de la tête 46. Le contour de cette dernière est celle d'une croix et chacune des branches de la croix a une surface inférieure plane orientés dans selon un plan perpendiculaire à l'axe de la roue 1 et une surface supérieure oblique par rapport au même axe. La surface inférieure de la tête constitue la surface de butée de la partie mâle. Au centre de la tête 46, se trouve un trou taraudé grâce auquel celle-ci est vissée sur l'extrémité filetée du tirant 28. Deux écrous vissés de part et d'autre de la tête 46 permettent de positionner axialement et de maintenir en position la tête sur le tirant 28. Afin de faciliter son introduction au travers de la plaque, la tête est équipée de chanfrein à son pourtour.

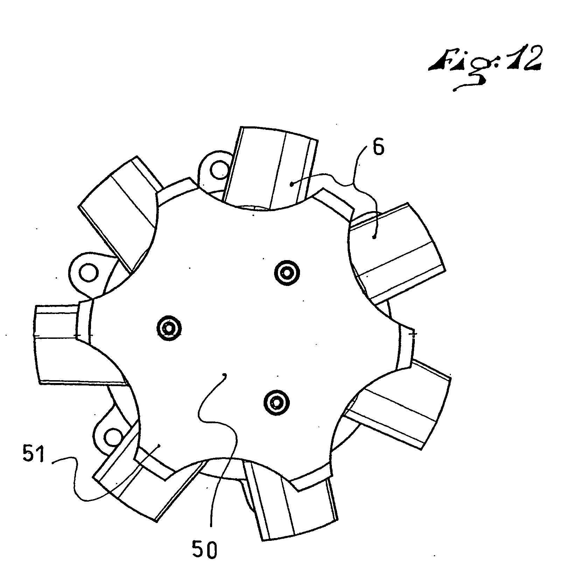

La figure 11 montre une vue de face de la plaque 48. L'ouverture 13 qui y est ménagée est au moins plus grande que le contour de la tête qui doit pouvoir y être ménagé. Bien entendu, la forme de croix n'est qu'une alternative choisi parmi de nombreuses formes possibles pour le contour de la tête. On pourra la remplacer par une structure à une ou plusieurs branches. La surface intérieure de la plaque, c'est à dire celle qui se trouve dirigée vers l'intérieur de la cavité est plane et constitue la surface de butée de la partie femelle du mécanisme de serrage rapide. Un tourillon 49 est planté dans la plaque 48 à proximité de l'un des appendices de l'ouverture en croix. Ce tourillon fait saillie de la surface intérieure de la plaque 48.

Avant la mise en place de la roue, l'utilisateur s'assure que le levier 26 est bien en position ouverte. Il approche ensuite la roue de façon à mettre face à face les zones d'appui interne et externe constituées par les pluralité de dents. Ainsi, la tête 46 pénètre dans la cavité, jusqu'à ce que les dents soit effectivement en contact. La pénétration de la tête 46 dans l'ouverture est aidée par la présence de chanfrein 36 ménagés sur la surface supérieure de la tête. La première phase d'actionnement du mécanisme de serrage rapide consiste alors en la mise en place des moyens de butée axiale par la rotation du sous-ensemble levier/tirant/tête. La rotation de ce sous-ensemble se poursuit jusqu'à ce que la surface latéral d'une des branches de la tête 46 arrive au contact du tourillon 49. Dans cette position, la surface inférieure de la tête fait face à la surface intérieure de la plaque. Dans la deuxième phase d'actionnement du mécanisme de serrage, le levier 26 est basculé dans la position fermée, ce qui ramène le tirant 28 vers le moyeu externe 2. La tête 46 vient au contact de la surface intérieure de la plaque et la mise en pression de ce contact assure le serrage.

Le desserrage de la roue 1 procède des deux étapes suivantes : Basculement du levier en position ouverte pour libérer le contact entre les butées axiale du mécanisme de serrage ; Rotation du sous ensemble levier/tirant/tête pour placer la tête 46 en correspondance avec l'ouverture de la plaque 48. La présence du tourillon à proximité de ladite ouverture facilite le placement de la tête face à l'ouverture.

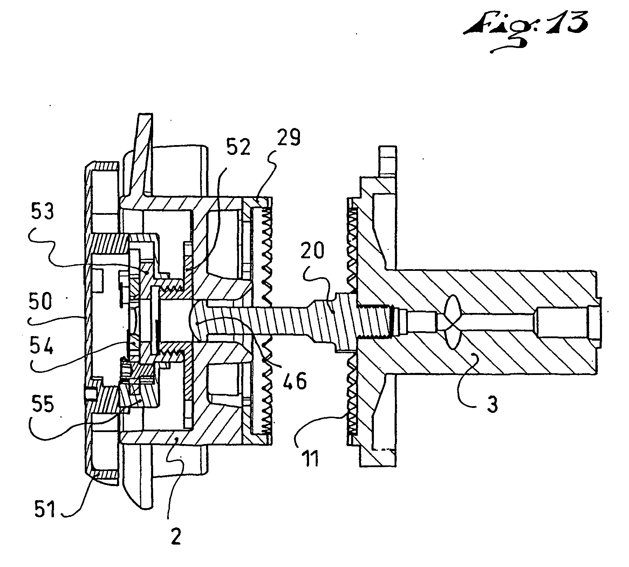

La figure 12 montre une vue de face d'un sixième mode de réalisation. La roue y est partiellement représentée par sept bâtons 6. la poignée d'actionnement 50 du mécanisme de serrage rapide comprend six protubérances 51 qui en facilite la prise en main. Cette poignée est également utilisée pour prendre la roue d'une seule main. La figure 13 montre le même dispositif de fixation de la roue incluant un dispositif de serrage rapide. Coté vélo, seul le moyeu interne 3 est représenté. Comme dans les modes de réalisation précédents, ce dernier est monté rotatif sur le cadre et reçoit les pignons de roue libre, lorsqu'il s'agit d'un montage roue arrière, et/ou d'un disque de frein. Une zone d'appui axiale, constitués par une pluralité de dents 11 disposé selon un cercle, est ménagée sur le moyeu interne. Le moyeu interne comprend également un plot 20, faisant sailli depuis le centre de celui-ci. Le plot 20, qui constitue la partie mâle du mécanisme de serrage rapide, est vissé à l'intérieur d'un trou taraudé et comprend à son extrémité saillante une tête 46 comportant une surface antérieure sensiblement arrondie et une surface postérieure sensiblement plane et orientée selon un plan perpendiculaire à l'axe de la roue. Le moyeu externe 2, rassemble les sept bâtons de la roue et comprend une couronne dentée 29 apte à coopérer avec la pluralité de dents ménagées sur le moyeu interne 3. La partie femelle du mécanisme de serrage rapide comprend une vis creuse 52, un écrou 53, un diaphragme 54, un plateau 55 et une poignée 50. La poignée 50 et le plateau 55 sont fixés ensemble par trois vis qui ne sont pas visibles sur cette coupe si bien que ces deux pièces sont liés ensemble, tant en rotation qu'en translation. L'écrou 53 comprend une première partie qui est une douille cylindrique taraudée et une deuxième partie, sous la forme d'une rondelle plate. Il est inséré dans le plateau 55, la douille étant libre de tourner par rapport à celui-ci dans une ouverture de celui-ci tandis que la rondelle prend appui sur le plateau pour empêcher le désengagement de l'écrou 53 et du plateau 55.

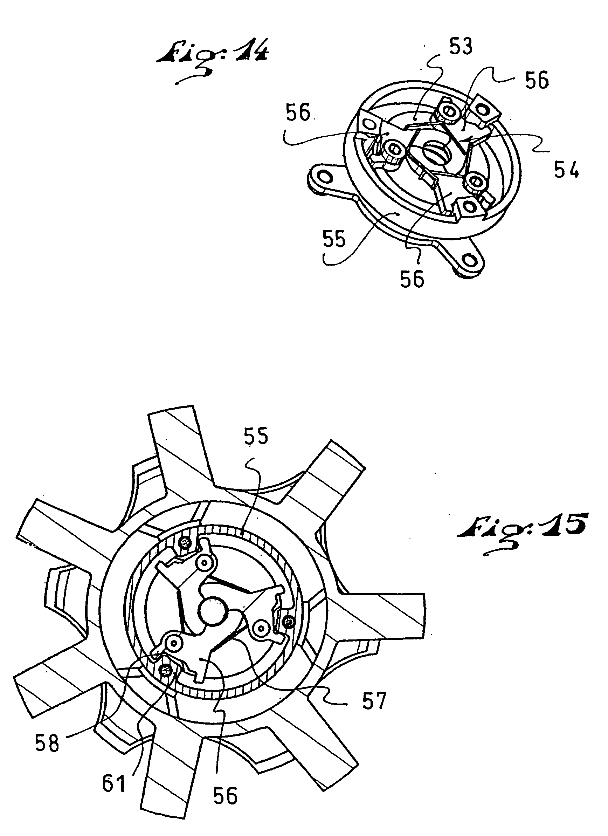

La figure 14 décrit en perspective le plateau 55, l'écrou 53 et le diaphragme 54 avant que le plateau 55 ne soit fixé à la poignée 50. Le diaphragme 54 est constitué de trois plaques pivotantes 56. Chacune de ces plaques 56 est montée pivotante sur la deuxième partie de l'écrou 53. En position fermée les trois plaques 56 définissent une ouverture de diamètre égal au diamètre du corps du plot, mais inférieur à la tête 46 de celui-ci. En position ouverte, les trois plaques laissent libre le passage de la tête 46. Des ressorts 57 maintiennent, au repos, le diaphragme en position fermé. Chacune des plaques pivotantes 56 comprennent trois cames 58, 59, 60 qui coopèrent avec trois renflements 61 de la circonférence intérieure du plateau 55. Les plaques comprennent également une surface de butée axiale 66 ménagée sur la face antérieure de la plaque et prévue pour recevoir la surface postérieure de la tête.

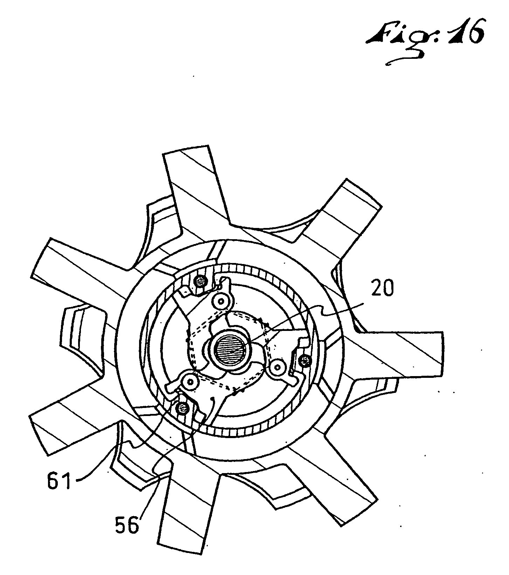

La figure 15 montre une coupe partielle du mécanisme de serrage en position de repos stable, avant que le plot 20 ne soit inséré. Les ressorts 57 ramènent les unes contre les autres les trois plaques 56. Les renflements 61 sont en contact avec les cames d'ouverture 58 de chacune des plaques 56. Celles-ci sont cependant libres de pivoter pour permettre l'ouverture du diaphragme 54 et le passage du plot 20.

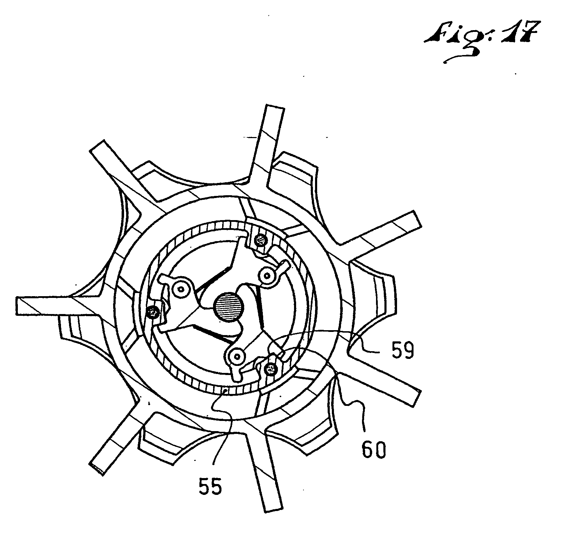

La figure 16 montre une coupe similaire du mécanisme de serrage rapide lors de l'introduction du plot 20. La surface arrondie de la tête 46 entre alors en contact avec les plaques 56 de telle façon que celles-ci pivotent et la laisse passer. Afin de faciliter encore le passage de la tête 46 et l'ouverture du diaphragme 54, un chanfrein est ménagé sur chacune des plaques 56 à l'endroit du contact avec la surface arrondie de la tête 46. Une fois que la tête est passée, les plaques se referment sur le plot 20 et retrouvent la position de repos stable. Le passage de la tête 46 au travers du diaphragme 54 constitue la phase de mise en place des butées axiales du mécanisme de serrage, celles-ci étant constituées par la surface postérieure de la tête 46 et par les surfaces de butée axiale des plaques pivotantes 56. Dans ce mode de réalisation, cette mise en place est automatiquement effectuée dès que l'utilisateur approche la roue du moyeu interne. Après cette phase de mise en place des moyens de butée, la phase de serrage peut avoir lieu.

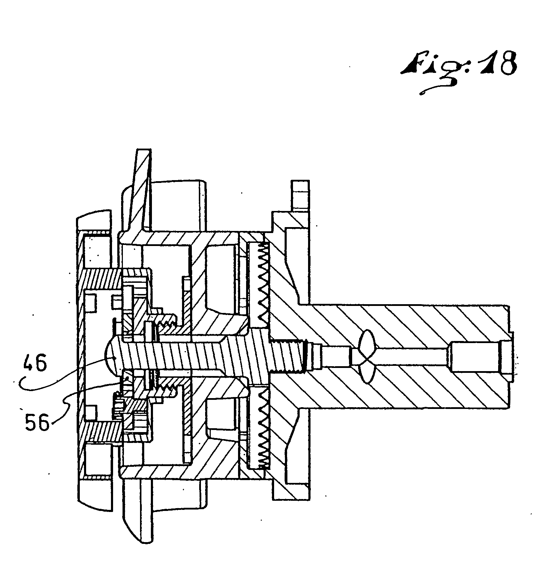

La figure 17 montre en coupe le mécanisme de serrage lors de la phase de serrage. La rotation par l'utilisateur de la poignée dans le sens du serrage amène dans un premier temps les renflements 61 du plateau 55 au contact d'une part des cames de fermeture 59 et d'autre part des cames de serrage 60. Le contact entre les renflements 61 et les cames de fermeture 59 empêche dorénavant le pivotement des plaques et donc l'ouverture du diaphragme 54. La poursuite de la rotation de la poignée par l'utilisateur à pour effet dans un deuxième temps d'entraîner en rotation le diaphragme 54, via le contact établi entre les renflements 61 et les cames de serrage 60. Bien entendu, l'écrou 53, sur lequel est fixé le diaphragme 54, est également entraîné en rotation et comme le taraudage de ce dernier est fileté à gauche, le mouvement de serrage de la poignée initiée par l'utilisateur « desserre » la liaison vis creuse 52 / écrou 53. Le terme « desserrer » est utilisé ici, bien qu'il ne s'agisse pas à proprement parler d'un desserrage, mais plutôt de l'écartement de l'écrou 53, et du diaphragme qui y est fixé, de la vis creuse 52.

La figure 18 montre une vue en coupe longitudinale du moyeu interne, du moyeu externe et du mécanisme de serrage en position serrée. Alors que l'écrou est « desserré » à son maximum, les plaques 56 sont en pression contre la surface postérieure de la tête 46. On peut voir sur cette figure que la plus grande partie des plaques est en appui contre la rondelle intégrée à l'écrou 53. Seule une petite partie de celle-ci ne se trouve pas en appui sur la rondelle. Cette partie est en porte-à-faux et elle est soumise aux efforts qui servent au maintien en place de la roue sur le moyeu interne. Bien qu'en porte-à-faux, le centre de gravité de cette partie est situé à l'intérieur du polygone défini par les points d'appui extrême de la plaque 56 sur la rondelle de l'écrou 53. Même sous les efforts exercés par la tête, les plaques ne se déforment pas et ne travaille qu'en cisaillement. Dans cette position le serrage est assuré et un dispositif de sûreté empêchant le desserrage complète le mécanisme de serrage.

Le désassemblage de la roue nécessite, de la part de l'utilisateur, l'actionnement de la poignée dans le sens habituel du dévissage. Dans un premier temps, la poignée, ainsi que le plateau qui lui est solidaire, se déplace par rapport à l'écrou 53 et aux plaques 56. Les renflements 61 quittent le contact des cames de serrage 60, et la rotation s'effectue jusqu'à ce que ceux-ci viennent en contact avec les cames d'ouverture 58. A ce moment, la pression de contact entre les plaques 56 et la tête 46 est encore trop forte et la rotation de la poignée 50 entraîne celle du diaphragme 54. Lorsque cette dernière est plus faible, la poursuite de la rotation fait basculer les plaques 56 et par conséquent, ouvre le diaphragme 54. Il est dès lors possible de retirer la roue, bien qu'il soit préférable de réinitialiser la position de l'écrou 53 en continuant un peu la rotation de la poignée. Une fois l'actionnement de la main sur la poignée terminé, les ressorts ramènent le diaphragme 54 et les plaques pivotantes 56 qui le constitue en position stable.

L'invention ne se limite pas aux quelques modes de réalisation décrit ici à titre purement illustratif. D'autres modes de réalisation équivalents sont également envisageables. On peut, par exemple, équiper le mode réalisation décrit aux figures 9 à 11 avec un levier à genouillère et à dispositif de sûreté tel qu'il est décrit dans le premier mode de réalisation au figures 1-5 et 19-21. On peut également envisager les modes de réalisations décrits au figures 7 et 8 en inversant l'emplacement des parties mâle et femelle du mécanisme de serrage rapide. Enfin, il est également envisageable de remplacer la poignée et le système vis écrou du mode de réalisation des figures 18 à 18, par un système utilisant un levier.

### NOMENCLATURE

- 1-: roue
- 2-: moyeu externe
- 3-: moyeu interne
- 4-: cadre
- 5-: palier à roulement
- 6-: bâton
- 7-: mécanisme de serrage
- 8-: capot
- 9-: cage
- 10-: platine
- 11-: dent
- 12-: élément de fixation
- 13-: ouverture
- 14-: moyens d'appui axial externe
- 15-: écrou
- 16-: corps cylindrique
- 17-: corps de roue libre
- 18-: disque de freinage
- 19-: axe de rotation
- 20-: plot
- 21-: base
- 22-: gorge
- 23-: embout
- 24-: jante
- 25-: plan médian de la roue
- 26-: levier
- 27-: bille
- 28-: tirant
- 29-: couronne
- 30-: première rondelle
- 31-: deuxième rondelle
- 32-: élargissement
- 33-: alvéole
- 34-: couvercle
- 35-: logements
- 36-: chanfrein
- 37-: rampe
- 40-: douille (figure 7)
- 41-: came
- 42-: ressort spirale
- 43-: cavité
- 44-: épaulement
- 45-: collet
- 46-: tête
- 47-: anneau élastique
- 48-: plaque
- 49-: tourillon
- 50-: poignée
- 51-: protubérances
- 52-: vis creuse
- 53-: écrou
- 54-: diaphragme
- 55-: plateau
- 56-: plaque pivotante
- 57-: ressorts
- 58-: came d'ouverture
- 59-: came de fermeture
- 60-: came de serrage
- 61-: renflements
- 62-: alésage transversal
- 63-: fente
- 64-: lèvre
- 65-: chapeau
- 66-: surface de butée axiale
- 67-: poussoir
- 68-: corps de levier
- 69-: pêne
- 70-: ressort de poussoir
- 71-: ressort de pêne
- 72-: vis de rappel
- 73-: rampe de pêne
- 74-: ouverture de levier
- 75-: plan incliné

## Revendications

1. Dispositif de fixation d'une roue de vélo sur un cadre comprenant :
- un moyeu interne (3) monté rotatif dans une portion dudit cadre,
- un moyeu externe (2) constituant la zone centrale de ladite roue,
- un mécanisme de serrage rapide (7) qui comprend une partie mâle (20,28,46) faisant saillie depuis l'un ou l'autre desdits moyeux interne et externe, une partie femelle (9, 43, 54) ménagée dans l'autre desdits moyeux, des moyens de butée axiale (27, 41, 56) assurant la retenue du moyeu externe contre le moyeu interne et des moyens de mise en place desdits moyens de retenue axiale
**caractérisé en ce que** lesdits moyens de mise en place ne sont plus actifs à la fin du serrage.

2. Dispositif de fixation selon la revendication 1, **caractérisé en ce que** le dit mécanisme de serrage rapide (7) est équipé d'un levier (26) dont le basculement par l'opérateur fournit la force de serrage axial dudit moyeu externe (2) de la roue contre ledit moyeu interne (1).

3. Dispositif de fixation d'une roue de vélo selon la revendication 2, **caractérisé en ce que** lesdites butées axiales comprennent une pluralité de billes (27) et **en ce que** lesdits moyens de mise en place des butées axiales comprennent des rampes (37) sur lesquelles roulent lesdites billes.

4. Dispositif de fixation d'une roue de vélo selon la revendication 3, **caractérisé en ce que** ledit mécanisme de serrage rapide comprend, en outre, une cage (9) constituant ladite partie femelle, ladite cage (9) étant percée de logements périphériques (35) qui chacun reçoivent une bille et étant entraînée en translation par la rotation dudit levier (26) et un plot (20), constituant ladite partie mâle.

5. Dispositif de fixation d'une roue de vélo selon la revendication 2, **caractérisé en ce que** lesdites butées axiales comprennent deux cames pivotantes (41) retenues à l'intérieur d'une douille (40) et **en ce que** les moyens de mise en place des butées axiales comprennent deux ouvertures ménagées dans ladite douille (40) et un ressort spirale (42) poussant les deux cames à faire saillie de la douille au travers desdites ouvertures.

6. Dispositif de fixation d'une roue de vélo selon la revendication 2, **caractérisé en ce que** lesdites butées axiales comprennent des cames (41) et **en ce que** lesdits moyens de mise en place des butées axiales comprennent un collet (45) sur lequel glissent les cames (41).

7. Dispositif de fixation d'une roue de vélo selon la revendication 2, **caractérisé en ce que** lesdites butées axiales comprennent une tête (46) et une plaque (48) ayant une ouverture de forme complémentaire de celle de ladite tête et **en ce que** lesdits moyens de mise en place des butées axiales comprennent des moyens permettant la rotation de la tête (46).

8. Dispositif de fixation d'une roue de vélo selon la revendication 1, **caractérisé en ce que** lesdites butées comprennent des plaques pivotantes (56) formant un diaphragme (54) et **en ce que** lesdits moyens de mise en place des butées axiales comprennent des ressorts (57) ramenant lesdites plaques pivotantes (56) dans une position de repos stable.

9. Dispositif de fixation d'une roue de vélo selon l'une des revendications précédentes, **caractérisé en ce qu'**il comprend un dispositif de sûreté capable d'empêcher l'ouverture accidentelle.

10. Dispositif de fixation d'une roue de vélo selon l'une des revendications précédentes, **caractérisé en ce que** ledit moyeu interne comprend une platine (10) depuis laquelle une pluralité de dents (11), disposées suivant un premier cercle, font saillie, **en ce que** ledit moyeu externe comprend également une pluralité de dents, disposée suivant un deuxième cercle de même diamètre que le premier et **en ce que** ledit mécanisme de serrage rapide (7) se trouve à l'intérieur desdits premier et deuxième cercles.

## Claims

1. Device for mounting a bicycle wheel onto a frame, comprising:
- an inner hub (3) rotatably mounted in a portion of said frame,
- an outer hub (2) constituting the central zone of said wheel,
- a quick-tightening mechanism (7) that comprises a male portion (20, 28, 46) projecting from either one of said inner and outer hubs, a female portion (9, 43, 54) housed in the other one of said hubs, axial abutment means (27, 41, 56) for retaining the outer hub against the inner hub, and means for positioning said axial retaining means
**characterized in that** said positioning means are no longer active upon completion of the tightening.

2. Mounting device according to claim 1, **characterized in that** said quick-tightening mechanism (7) is equipped with a lever (26) that is tilted by the operator to provide force for axial tightening of said outer hub (2) of the wheel against said inner hub (1).

3. Device for mounting a bicycle wheel according to claim 2, **characterized in that** said axial abutments comprise a plurality of balls (27) and **in that** said means for positioning the axial abutments comprise ramps (37) upon which said balls roll.

4. Device for mounting a bicycle wheel according to claim 3, **characterized in that** said quick-tightening mechanism further comprises a cage (9) constituting said female portion, said cage (9) being pierced with peripheral housings (35), each of which receives a ball, and being translationally driven by the rotation of said lever (26), as well as a pin (20) constituting said male portion.

5. Device for mounting a bicycle wheel according to claim 2, **characterized in that** said axial abutments comprise two pivotable cams (41) retained within a bushing (40), and **in that** the means for positioning the axial abutments comprise two openings housed in said bushing (40) and a spiral spring (42) pushing the two cams to project from the bushing through said openings.

6. Device for mounting a bicycle wheel according to claim 2, **characterized in that** said axial abutments comprise cams (41) and **in that** said means for positioning the axial abutments comprise a collar (45) on which the cams (41) slide.

7. Device for mounting a bicycle wheel according to claim 2, **characterized in that** said axial abutments comprise a head (46) and a plate (48) having an opening, the shape of which said plate being complementary to the shape of said head; and **in that** said means for positioning the axial abutments comprise means enabling the rotation of the head (46).

8. Device for mounting a bicycle wheel according to claim 1, **characterized in that** said abutments comprise pivotable plates (56) forming a diaphragm (54) and **in that** said means for positioning the axial abutments comprise springs (57) that bring back said pivotable plates (56) to a stable resting position.

9. Device for mounting a bicycle wheel according to one of the preceding claims, **characterized in that** it comprises a safety device that is capable of preventing an accidental opening.

10. Device for mounting a bicycle wheel according to one of the preceding claims, **characterized in that** said inner hub comprises a plate (10) from which a plurality of teeth (11), arranged along a first circle, project; **in that** said outer hub also comprises a plurality of teeth, arranged along a second circle having the same diameter as the first; and **in that** said quick-tightening mechanism (7) is located within said first and second circles.

## Patentansprüche

1. Vorrichtung zur Befestigung eines Fahrradrades an einem Rahmen, die aufweist,
• eine innere Nabe (3), die drehbar an einen Teil des genannten Rahmens montiert ist
• eine äußere Nabe (2), die den zentralen Bereich des genannten Rades bildet
• ein Schnellklemmmechanismus (7), der ein männliches Teil (20, 28, 46) aufweist, das von der genannten inneren und äußeren Nabe hervorsteht, ein weibliches Teil (9, 43, 54), das in der jeweils anderen der genannten Naben ausgenommen ist, Mittel zur axialen Arretierung (27, 41, 56), die die den Anzug der äußeren Nabe gegen die innere Nabe sicherstellen und Mittel zum Anordnung der genannten Mittel des axialen Anzugs.
**dadurch gekennzeichnet, dass** die genannten Mittel zum Anordnen am Ende des Klemmens nicht mehr aktiv sind.

2. Vorrichtung zur Befestigung gemäß Anspruch 1, **dadurch gekennzeichnet, dass** der genannte Schnellklemmmechanismus (7) mit einem Hebel (26) bestückt ist, dessen Kippen durch den Benutzer die axiale Klemmkraft der genannten äußeren Nabe (2) des Rades gegen die genannte innere Nabe (1) liefert.

3. Vorrichtung zur Befestigung eines Fahrradrades gemäß Anspruch 2, **dadurch gekennzeichnet, dass** die genannten axialen Arretierungen eine Vielzahl an Kugeln (27) aufweisen und **dadurch**, dass die genannten Mittel zum Anordnen der axialen Arretierung Rampen (37) aufweisen auf denen die genannten Kugeln rollen.

4. Vorrichtung zur Befestigung eines Fahrradrades gemäß Anspruch 3, **dadurch gekennzeichnet, dass** der genannte Schnellklemmmechanismus unter Anderem einen Käfig (9), der das genannte weibliche Teil bildet, aufweist, der genannte Käfig (9) wird von peripheren Aufnahmen (35) durchlocht, die jede eine Kugel aufnehmen und die translatorisch durch eine Rotation des genannten Hebels (26) mitgezogen werden und einen Fortsatz (20), der das genannte männliche Teil bildet, aufweist.

5. Vorrichtung zur Befestigung eines Fahrradrades gemäß Anspruch 2, **dadurch gekennzeichnet, dass** die genannten axialen Arretierungen zwei schwenkbare Nocken (41) aufweisen, die im Innern einer Buchse (40) gehalten werden und **dadurch**, dass die Mittel zum Anordnen der axialen Arretierungen zwei Öffnungen aufweisen, die in der genannten Buchse (40) ausgenommen sind und eine Spiralfeder (42), die die beiden Nocken durch die genannten Öffnungen hindurch aus der Büchse drückt, so dass sie hervorstehen.

6. Vorrichtung zur Befestigung eines Fahrradrades gemäß Anspruch 2, **dadurch gekennzeichnet dass** die genannten axialen Arretierungen Nocken (41) aufweisen und **dadurch**, dass die genannten Mittel zum Anordnen der axialen Arretierungen einen Flansch (45) aufweisen, auf welchen die Nocken (41) gleiten.

7. Vorrichtung zur Befestigung eines Fahrradrades gemäß Anspruch 2, **dadurch gekennzeichnet, dass** die genannten axialen Arretierungen einen Kopf (46) und eine Platte (48), die eine Öffnung in einer ergänzenden Form zu jener des genannten Kopfes hat, aufweisen und **dadurch**, dass die genannten Mittel zum Anordnen der axialen Arretierungen Mittel, die die Drehung des Kopfes (46) erlauben, aufweisen.

8. Vorrichtung zur Befestigung eines Fahrradrades gemäß Anspruch 1, **dadurch gekennzeichnet, dass** die genannten Arretierungen schwenkbare Platten (56) aufweisen, die eine Blende (54) bilden und **dadurch**, dass die genannten Mittel zum Anordnen der axialen Arretierungen Federn (57), die die schwenkbaren Platten (56) in eine stabile Ruhestellung bringen, aufweisen.

9. Vorrichtung zur Befestigung eines Fahrradrades gemäß einem der vorangegangenen Ansprüche, **dadurch gekennzeichnet, dass** sie eine Sicherheitsvorrichtung aufweist, die eine zufällige Öffnung verhindern kann.

10. Vorrichtung zur Befestigung eines Fahrradrades gemäß einem der vorangegangenen Ansprüche, **dadurch gekennzeichnet, dass** die genannte innere Nabe eine Platine (10) aufweist, aus der eine Vielzahl an Zähnen (11), die entlang eines ersten Kreises angeordnet sind, hervorstehen, **dadurch**, dass die genannte äußere Nabe ebenfalls eine Vielzahl an Zähnen aufweist, die entlang eines zweiten Kreises des selben Durchmessers, wie der erste Kreis, angeordnet sind, und **dadurch**, dass der genannte Schnellklemmmechanismus (7) sich im Innern der genannten ersten und zweiten Kreise befindet.
